# EUROPÄISCHE PATENTSCHRIFT

(11) **EP 1 371 173 B1**
(45) Veröffentlichungstag und Bekanntmachung des Hinweises auf die Patenterteilung: **28.11.2007**
(21) Anmeldenummer: 02759770.7
(22) Anmeldetag: 07.03.2002
(51) Int. Cl.: H04L 12/26, H04L 29/06

(54) **VERFAHREN UND TELEKOMMUNIKATIONSSYSTEM ZUR ÜBERWACHUNG EINES DATENSTROMS IN EINEM DATENNETZ**
METHOD AND TELECOMMUNICATIONS SYSTEM FOR MONITORING A DATA FLOW IN A DATA NETWORK
PROCEDE ET SYSTEME DE TELECOMMUNICATION POUR CONTROLER UN FLUX DE DONNEES DANS UN RESEAU DE DONNEES

(30) Priorität: 21.03.2001 EP 01107063
(43) Veröffentlichungstag der Anmeldung: 17.12.2003
(73) Patentinhaber: SIEMENS AKTIENGESELLSCHAFT, 80333 München (DE)
(72) Erfinder: STIFTER, Helmut, 81739 München (DE); PFÄHLER, Wolfgang, 85221 Dachau (DE); KREUSCH, Norbert, 82061 Neuried (DE)
(86) Internationale Anmeldenummer: PCT/EP2002/002524
(87) Internationale Veröffentlichungsnummer: WO 2002/082728

(56) Entgegenhaltungen:
- WO-A-00/42742
- WO-A-00/56019
- WO-A-99/55062
- METZ CHRISTOPHER: "AAA Protocols: Authentication, Authorization, and Accounting for the Internet" IEEE INTERNET COMPUTING, 1999, Seiten 75-79, XP002176948

## Beschreibung

Die Erfindung betrifft ein Verfahren zur Überwachung eines Datenstroms in einem Datennetz zwischen zumindest einem Telekommunikationsendgerät, welches über zumindest ein Gateway mit dem Datennetz verbunden ist und zumindest einer weiteren Telekommunikationseinrichtung, wobei zumindest ein Authentifikationsserver vorgesehen ist, der dazu eingerichtet ist, eine Zugangskontrolle zum Datennetz durchzuführen.

Weiters betrifft die Erfindung ein Telekommunikationssystem, welches zur Überwachung eines Datenstroms in einem Datennetz zwischen zumindest einem Telekommunikationsendgerät, welches über zumindest ein Gateway mit dem Datennetz verbunden ist und zumindest einer weiteren Telekommunikationseinrichtung eingerichtet ist, wobei zumindest ein Authentifikationsserver vorgesehen ist, der dazu eingerichtet ist, eine Zugangskontrolle zum Datennetz durchzuführen.

Von Gesetzgebern wird in zunehmenden Maß verlangt, dass Betreiber von Datennetzen Funktionen zur Verfügung stellen, die es ermöglichen im Bedarfsfall den Datenaustausch einzelner Benutzer zu überwachen.

Das legale Abhören von Datenströmen die sogenannte "Lawful Interception" in Datennetzen, beispielsweise dem Internet, wird zur Zeit unterschiedlich gelöst.

Eine bekannte Methode besteht darin, externe Sniffer (Analysatoren) in einem LAN-Segment des zu Überwachenden anzuordnen, welche den gesamten Paket-Datenstrom analysieren und den Verkehr des Überwachten ausfiltern, vervielfältigen und dem Bedarfsträger zustellen. Nachteilig an dieser Methode ist vor allem, dass ein zeitlich befristeter, physikalischer Eingriff in das Netz erforderlich ist. Bei erhöhter Mobilität des zu Überwachenden ist diese Methode praktisch nicht verwendbar.

Eine andere Methode, die vor allem zum Abhören/Überwachen des e-Mailverkehrs dient, sieht vor, dass an einem oder mehreren e-Mailservern eine automatische Weiterleitungsfunktion implementiert ist, die sowohl ankommende als auch abgehende e-Mails dem Bedarfsträger, beispielsweise eine Behörde, zustellt. Ähnliches gilt für Voice-Mail etc. Bei dieser Methode ist es erforderlich, dass alle e-Mailserver dazu eingerichtet sein müssen, einen Abhör/Überwachungsfall zu erkennen und an die zuständige Behörde weiterzuleiten, was mit einem hohen administrativen Aufwand verbunden sein kann.

Aus der WO 0042742 sind eine Überwachungsmethode und ein Überwachungssystem zur Durchführen eines gesetzlichen Abhorchens in einem paketorientierten Netz, wie dem GPRS- oder dem UMTS-Netz beschrieben. Hierzu ist ein erstes Netzelement mit Überwachungsfunktionalität für Datenpakete vorgesehen, welches durch ein zweites Netzelement gesteuert wird. Die abgefangenen (überwachten) Daten werden über ein Gateway, welches eine Schnittstelle zu einer zum Abhören berechtigten Behörde darstellt geführt. Nachteilig an dieser Methode ist vor allem, dass auch Datenströme von Benutzern, die nicht abgehört werden sollen durch das Netzelement geführt werden, wodurch sich der technische und administrative Aufwand dieser Methode wesentlich erhöht.

Zur "Lawful Interception" im Internet siehe beispielsweise ETSI TR 101 750 V1.1.1.

Nicht außer Acht zu lassen sind die sehr hohen Kosten, die üblicherweise für einen Netzbetreiber bei zur Verfügungstellung der oben erwähnten Abhör/Überwachungsfunktionalität anfallen, die vor allem durch einen hohen administrativen Aufwand verursacht werden.

Es ist daher eine Aufgabe der Erfindung einen Weg zu schaffen, der es auf einfache und kostengünstige Weise ermöglicht, eine Abhör/überwachungsfunktion in einem Datennetz zu implementieren und anzubieten.

Diese Aufgabe wird mit einem Verfahren der eingangs genannten Art dadurch gelöst, dass von dem zumindest einem Authentifikationsserver überprüft wird, ob der Datenstrom zwischen dem zumindest einem Telekommunikationsendgerät und der zumindest einen weiteren Telekommunikationseinrichtung überwacht werden soll, wobei in einem Überwachungsfall eine Kopie des Datenstroms erstellt wird, welcher eine Identifikationskennzeichnung beigefügt wird, und die Kopie samt Identifikationskennzeichnung hierauf an zumindest einen LI-Server und/oder direkt an eine Auswerteeinheit übermittelt wird.

Es ist ein Verdienst der Erfindung, eine Abhörfunktionalität von seiten des Netzes zur Verfügung zu stellen, wodurch ein Eingriff mittels externer Abhörgeräte in das Netz vermieden werden kann. Weiters ist ein Zugriff auf einen Datenstrom eines zu Überwachenden auch dann möglich, wenn er mobil ist und seinen Standort ändert, da er sich über den Authentifizierungsserver eines Providers, der die Maßnahmen zur Überwachung setzt, einwählen muss.

In einer Variante der Erfindung wird die Kopie von dem Gateway erstellt.

Eine andere Variante der Erfindung sieht vor, dass die Kopie von einem eigens hierfür vorgesehenen Überwachungsserver erstellt wird.

Vorteilhafterweise stellt der LI-Server anhand einer Identifikationskennzeichnung fest, ob zumindest eine Sekundärkopie der Kopie erstellt werden soll, und an wen die Kopie und/oder die zumindest eine Sekundärkopie zugestellt werden soll (en).

Günstigerweise erstellt der LI-Server die zumindest eine Sekundärkopie, d.h. der LI-Server vervielfältigt die Kopie entsprechend der Anzahl der berechtigten Stellen.

Weitere Vorteile lassen sich dadurch erzielen, dass der LI-Server eine Schnittstellenanpassung zu der Auswerteeinheit durchführt.

Der Authentifizierungsserver kann anhand einer dem zumindest einen Telekommunikationsendgerät in einer verborgenen Datenbank zugeordneten Überwachungskennzeichnung feststellen, ob ein Überwachungsfall vorliegt.

Die verborgene Datenbank steht mit einer Verwaltungsdatenbank zur Verwaltung von Benutzerprofilen und Benutzerauthentifikationsdaten in Verbindung, wobei jedem in der Verwaltungsdatenbank eingetragenen Benutzer eine Überwachungskennzeichnung in der verborgenen Datenbank zugeordnet wird.

Im Fall einer Löschung von Benutzerauthentifikationsdaten in der Verwaltungsdatenbank werden auch die zugeordneten Überwachungskennzeichnungen in der verborgenen Datenbank gelöscht.

In einer weiteren Variante der Erfindung wird der Datenstrom als Voice over IP-Datenstrom übertragen, wobei ein Call-Controller den Datenstrom über den Überwachungsserver, der die Kopie erstellt, umleitet.

Eine andere Möglichkeit besteht darin, dass der Authentifizierunsserver in einem Überwachungsfall den Datenstrom über den Überwachungsserver umleitet.

Eine Variante des Umleitens besteht darin, dass der Datenzugang von dem Gateway zu dem Überwachungsserver durchgetunnelt wird.

Um einen Datenverlust zu vermeiden, falls die Kopie nicht sofort an einen Bedarfsträger zugestellt werden kann, kann die Kopie des Datenstroms auf dem Überwachungsserver und/oder auf dem LI-Server zwischengespeichert werden.

In einer bevorzugten Ausführungsform der Erfindung steuert der Controller sowohl das Gateway als auch den Überwachungsserver.

Eine weitere sehr vorteilhafte Ausführungsform der Erfindung sieht vor, dass der zumindest eine Authentifizierungsserver den Überwachungsserver steuert.

Zur Durchführung des erfindungsgemäßen Verfahrens eignet sich insbesondere ein Telekommunikationssystem der eingangs genannten Art, bei welchem der Authentifikationsserver dazu eingerichtet ist, zu überprüfen, ob der Datenstrom zwischen dem zumindest einem Telekommunikationsendgerät und der zumindest einen weiteren Telekommunikationseinrichtung überwacht werden soll, wobei das Telekommunikationssystem dazu eingerichtet ist, in einem Überwachungsfall eine Kopie des Datenstroms zu erstellen und der Kopie eine Identifikationskennzeichnung hinzuzufügen und die Kopie samt Identifikationskennzeichnung an zumindest einen LI-Server und/oder direkt an eine Auswerteeinheit zu übermitteln.

In einer ersten Variante der Erfindung ist das Gateway dazu eingerichtet, die Kopie des Datenstroms zu erstellen.

Bei einer zweiten Variante der Erfindung ist ein Überwachungsserver vorgesehen, der dazu eingerichtet ist, die Kopie zu erstellen.

Weiters ist der LI-Server dazu eingerichtet, anhand der Identifikationskennzeichnung festzustellen, ob zumindest eine Sekundärkopie der Kopie erstellt werden soll, und an wen die Kopie und/oder die zumindest eine Sekundärkopie zugestellt werden soll (en) .

Günstiger Weise ist der LI-Server dazu eingerichtet, die zumindest eine Sekundärkopie zu erstellen.

Weitere Vorteile lassen sich dadurch erzielen, dass der LI-Server, dazu eingerichtet ist eine Schnittstellenanpassung zu der Auswerteeinheit durchzuführen.

Der Authentifizierungsserver kann dazu eingerichtet sein, anhand einer dem zumindest einen Telekommunikationsendgerät in einer verborgenen Datenbank zugeordneten Überwachungskennzeichnung festzustellen, ob ein Überwachungsfall vorliegt.

Die verborgene Datenbank und eine dem Authentifizierungsserver zugeordnete Verwaltungsdatenbank zur Verwaltung von Benutzerprofilen und Benutzerauthentifikationsdaten sind dazu eingerichtet, Daten miteinander auszutauschen, wobei jedem in der Verwaltungsdatenbank eingetragenen Benutzer eine Überwachungskennzeichnung in der verborgenen Datenbank zugeordnet ist.

Das Telekommunikationssystem kann dazu eingerichtet sein, im Fall einer Löschung von Benutzerauthentifikationsdaten in der Verwaltungsdatenbank zugeordnete Überwachungskennzeichnungen in der verborgenen Datenbank zu löschen.

In einer vorteilhaften Variante der Erfindung, ist der Datenstrom ein Voice over IP-Datenstrom, wobei ein Call-Controller vorgesehen ist, der dazu eingerichtet ist, in einem Überwachungsfall den Datenstrom über den Überwachungsserver umzuleiten.

Eine andere günstige Variante sieht vor, dass der Authentifizierungsserver dazu eingerichtet ist, in einem Überwachungsfall den Datenstrom über den Überwachungsserver umzuleiten.

Weitere Vorteile lassen sich dadurch schaffen, dass das Telekommunikationssystem dazu eingerichtet ist, den Datenzugang von dem Gateway zu dem Überwachungsserver durchzutunneln.

Um einem Datenverlust vorzubeugen können der Überwachungsserver und/oder der LI-Server dazu eingerichtet sein, die Kopie des Datenstroms zwischenzuspeichern.

Weiters kann der Call-Controller dazu eingerichtet sein, sowohl das Gateway als auch den Überwachungsserver zu steuern.

In einer anderen Variante ist der Authentifizierungsserver dazu eingerichtet, den Überwachungsserver zu steuern. Günstigerweise weist der Uberwachungsserver die Funktionalität eines Proxy-Servers auf.

Die Erfindung samt weiterer Vorteile ist im folgenden anhand einiger nicht einschränkender Ausführungsbeispiele, die in der Zeichnung veranschaulicht sind dargestellt, in dieser zeigen schematisch:
Fig. 1 ein erfindungsgemäßes Telekommunikationssystem,
Fig. 2a eine Kopie eines Datenstroms mit einer Identifikationskennzeichnung,
Fig. 2b die Identifikationskennzeichnung aus Fig. 2a im näheren Detail und
Fig. 3 einen beispielsweisen Ablauf des erfindungsgemäßen Verfahrens.

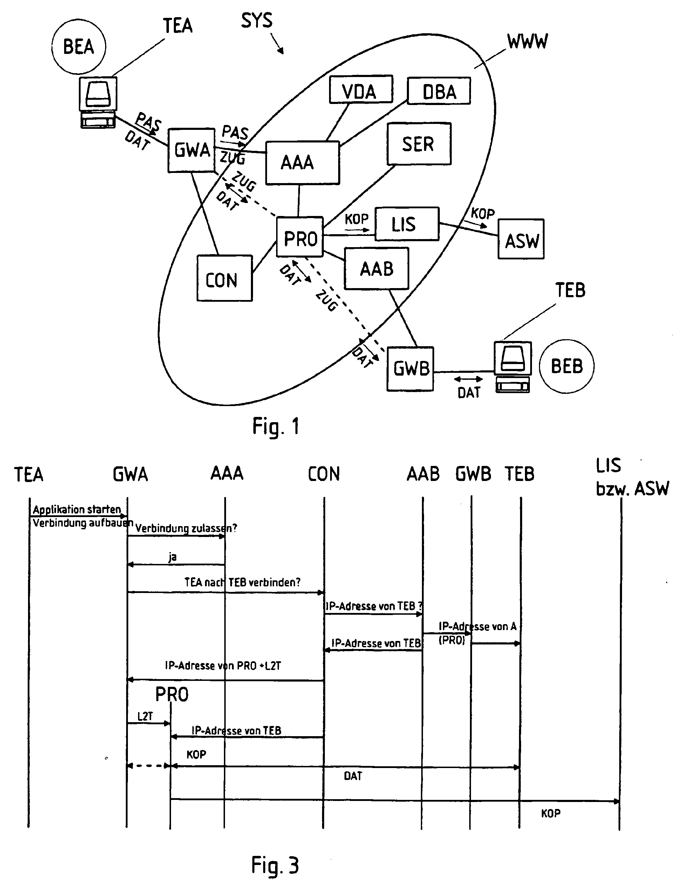

Gemäß Fig. 1 muss sich jeder Benutzer BEA, BEB, eines erfindungsgemäßen Telekommunikationssystems SYS der über sein Telekommunikationsendgerät TEA bzw. Telekommunikationseinrichtung TEB Zugang zu einem Datennetz WWW, beispielsweise dem Internet, haben will, über ein Gateway GWA, GWB einwählen bzw. sich bei einem Zugangsserver AAA anmelden. Unter einer Telekommunikationsvorrichtung wird in diesem Dokument jede Art von Telekommunikationsendgerät, wie beispielsweise ein mit dem Datennetz verbundener PC, bzw. auch Server, die in dem Datennetz WWW stehen können, verstanden.

Der Zugangsserver AAA, AAB kann als AAA-Server oder als Remote Authentication Dial-In User Service Server kurz RADIUS-Server ausgebildet sein. Um einen Datenzugang ZUG dem Datennetz WWW zu erlangen, ist es für einen Benutzer erforderlich sich zu authentifizieren.

Die Authentifikation eines Benutzers BEA, BEB kann dabei über Eingabe eines Passwortes PAS bzw. einer Benutzeridentifikation, beispielsweise des Namens des Benutzers, erfolgen.

Anhand des Identifikationsergebnisses entscheidet der Zugangsserver AAA, AAB, ob einen Datenzugang ZUG zu dem Datennetz WWW gewährt oder verweigert wird.

Die Authentifikation des Benutzers BEA, BEB kann von seiten des Zugangsservers AAA mittels Abfrage einer Verwaltungsdatenbank VDA, in der die Benutzerdaten verwaltet werden erfolgen.

Liegt ein positives Authentifizierungsergebnis vor, so wird eine verborgene Datenbank abgefragt, in der jedem in der Verwaltungsdatenbank eingetragenen Benutzer eine Überwachungskennzeichnung UWD zugeordnet ist. Besagt die Überwachungskennzeichnung UWD, dass ein Datenstroms DAT zwischen dem Telekommunikationsendgerät TEA des Benutzer BEA und einem weiteren Telekommunikationsendgerät durchgeführt werden soll, so wird eine Kopie KOP des Datenstromes DAT angefertigt.

Die Kopie KOP des originalen Datenstromes DAT kann beispielsweise von dem Gateway GWA, welches dem Telekommunikationsendgerät TEA zugeordnet ist, oder von einem eigens hierfür vorgesehenen Überwachungsserver PRO erstellt werden.

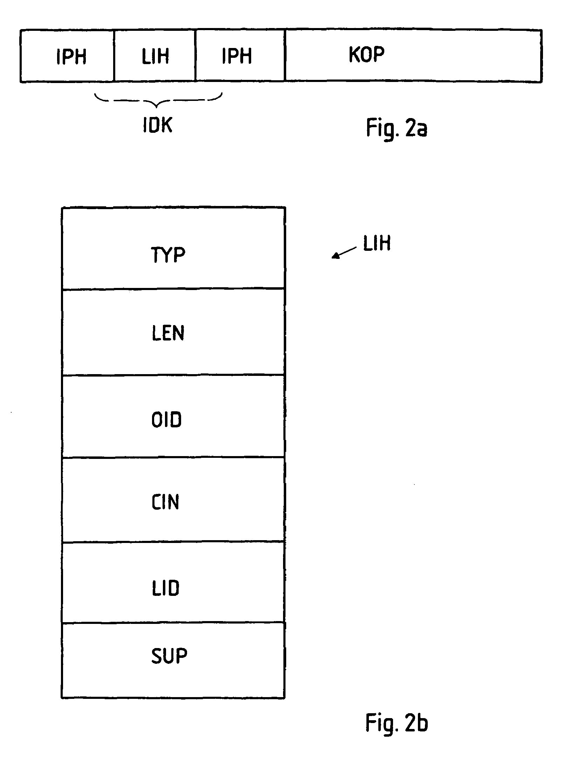

Für den Fall, dass der Überwachungsserver PRO die Kopie des originalen Datenstromes DAT erstellt, wird der Datenstrom DAT zwischen über den Überwachungsserver PRO umgeleitet. Bevorzugter Weise weist dieser Server Proxyfunktionalität auf. Der Überwachungsserver PRO unterscheidet sich von einem ProxyServer lediglich dadurch, dass der Überwachungsserver PRO dazu eingerichtet ist, die Kopie KOP eines über ihn laufenden (umgeleiteten) Datenstroms DAT zu erstellen und diese Kopie mit einer mitgelieferten Identifikationskennzeichnung IDK (Fig. 2), beispielsweise der IP-Adresse oder einer verschlüsselten Kennzeichnung des abzuhörenden Benutzers, zu versehen und an einen "Lawful Interception"-Server oder kurz LI-Server LIS zu übermitteln, wobei der originale Datenstrom an die durch den Benutzer bestimmte Zieladresse weitergeroutet wird.

Erstellt das Gateway GWA die Kopie KOP, so ist die soeben beschriebene Funktionalität des Kopierens und Weiterleitens der Kopie KOP an den LI-Server bzw. des Routens des originalen Datenstromes DAT gemäß der benutzerbestimmten Zieladresse in dem Gateway GWA realisiert.

Ein Datenzugang ZUG zu dem Datennetz WWW kann im Überwachungsfall für den zu überwachenden Benutzer BEA direkt über das Gateway und den Überwachungsserver PRO erfolgen.

Die Umleitung des Datenstromes DAT an den Überwachungsserver PRO kann mittels Tunneling, beispielsweise gemäß dem in der RFC 2661 spezifizierten L2T-Protokolls erfolgen.

Eine andere Möglichkeit den Datenstrom DAT über den Überwachungsserver PRO umzuleiten besteht darin, dass dem Überwachungsserver PRO eine Adresse in dem Datennetz zugeordnet wird, im Fall des Internet eine IP-Adresse. Diese Adresse kann in einer Speichereinheit des Zugangsservers AAA, AAB abgelegt sein, wobei im Überwachungsfall der Datenstrom DAT, beispielsweise gemäß dem TCP/IP-Protokolls, an die Adresse des Überwachungsservers PRO weitergeleitet wird.

Der Überwachungsserver PRO erstellt sodann, wie bereits oben erwähnt, eine Kopie KOP des über ihn umgeleiteten Datenstroms DAT und übermittelt diese Kopie KOP an einen LI-Server, der anhand der Identifikationskennzeichnung IDK, welche der Kopie beigefügt ist, entscheidet was mit der Kopie KOP zu geschehen hat, beispielsweise ob weitere Kopien d.h. Sekundärkopien WKO der Kopie erstellt werden sollen bzw. an welche Auswerteeinheit(en) die Kopie(n) zu übermitteln ist (sind).

Die weitere Verarbeitung und Auswertung der Kopie KOP erfolgt dann in der Auswerteeinheit ASW, beispielsweise einem dazu eingerichteten PC einer Behörde.

Der LI-Server LIS ist üblicherweise eine Anordnung mehrerer Workstations. Seine Aufgabe ist es, wie bereits oben erwähnt, die Kopie KOP des Datenstromes DAT zu empfangen, die der Kopie KOP von dem Überwachungsserver beigefügte Identifikationskennzeichnung IDK auszuwerten, gegebenenfalls weitere Kopien WKO der Kopie KOP herzustellen und an die Bedarfsträger zuzustellen.

Auch ist der LI-Server dazu eingerichtet, eine Schnittstellenanpassung zu unterschiedlichen Auswerteeinheiten ASW der Bedarfsträger durchzuführen. So kann es beispielsweise notwendig sein für eine Überwachung zwei H.323 Verbindungen zu einem bekannten Time Division Multiplex oder kurz TDM-Übergabe-Interface der überwachenden Behörde herzustellen. Eine andere Möglichkeit besteht darin, die Kopie über ein IP-Übergabe Interface an die überwachende Behörde zuzustellen.

Die Informationen, die der LI-Server LIS benötigt, um die Kopie an den Bedarfsträger bzw. die Auswerteeinheit ASW weiterzuleiten, können von Seiten der Bedarfsträger in einer Datenbank LID abgelegt werden.

Eine weitere Möglichkeit besteht darin, dass die Kopie KOP samt der Identifikationskennzeichnung IDK von dem Überwachungsserver PRO bzw. Gateway GWA direkt an die Auswerteeinheit ASW zugestellt wird.

Nach dem Erstellen der Kopie KOP des Datenstroms DAT, wird der originale Datenstrom DAT von dem Überwachungsserver PRO auf die herkömmliche Weise, beispielsweise gemäß dem TCP/IP-Protokoll, an den zweiten Benutzer BEB bzw. die Telekommunikationseinrichtung TEB, SER weitergeroutet.

Nach Fig. 2a wird der Kopie KOP des Datenstromes DAT eine Identifikationskennzeichnung IDK als Header vorangestellt. Die Identifikationskennzeichnung kann zumindest einen IP-Header IPH aufweisen, beispielsweise die IP-Adresse des überwachten Benutzers BEA. Weiters kann ein spezieller LI-Header LIH vorgesehen sein (Fig. 2b), der Informationen betreffend die weitere Datenübermittlung für den LI-Server enthält. So kann beispielsweise die erste Zeile die Art TYP der Nachricht enthalten, ob es zum Beispiel um eine Sprachnachricht oder eine "abgehörte" e-Mail handelt. Eine nächste Zeile kann die Länge LEN des Headers enthalten, während in einer dritten Zeile eine Operator-ID OID gemäß dem Standard ETSI ES 201671 enthalten kann. Eine Rufidentifizierungsnummer CIN kann zur Identifizierung eines "abgehörten" Benutzers BEA dienen, während eine Behördenidentifizierung LID dazu dient den Bedarfsträger, an den die Kopie KOP zugestellt werden soll, zu identifizieren. Weitere Informationen SUP können an die soeben genannten im Bedarfsfall angehängt werden.

Gemäß Fig. 3 wird im Fall einer Sprachübertragung gemäß dem Voice over IP-Protokoll eine entsprechende Applikation APP auf dem Telekommunikationsendgerät TEA des Anrufers BEA gestartet, welches daraufhin eine Verbindung über ein erstes Gateway GWA zu einem ersten Zugangsserver AAA aufbaut. Dieser Zugangsserver AAA überprüft, welcher Teilnehmer den Dienst zur Sprachübertragung in Anspruch nehmen will, und ob dieser zur Inanspruchnahme dieses Dienstes berechtigt ist. Zu diesem Zweck findet eine H.323 oder RADIUS-Kommunikation zwischen dem Gateway GWA und dem Zugangsserver AAA statt.

Ist der anrufende Benutzer BEA zur Benutzung des Sprachdienstes berechtigt, so überprüft der Zugangsserver AAA anhand der Authentifizierung dieses Benutzers BEA, ob der Datenaustausch zwischen dem Anrufer und einem Angerufenen überprüft werden soll.

Nach erfolgreicher Zugangsprüfung ermittelt der Call-Controller CON durch Kommunikation mit einem zweiten Zugangsserver AAB die IP-Adresse des angerufenen Telekommunikationsendgerätes TEB und veranlasst den Signalisierungsverkehr über ein weiteres Gateway GWB zu diesem Telekommunikationsendgerät TEB.

Ist nun der Anrufer zu überwachen, dann baut der Controller CON die Verbindung vom Gateway GWA nicht direkt zu dem angerufenen Telekommunikationsendgerät TEB auf, wie es üblicherweise der Fall ist, sondern schleift den Überwachungsserver PRO ein. D. h. die Verbindung von dem ersten Telekommunikationsendgerät TEA zu dem zweiten Telekommunikationsendgerät TEB wird in zwei Strecken zerlegt, nämlich in die Strecke von dem ersten Telekommunikationsendgerät TEA zum Überwachungsserver PRO und in die Strecke von dem Überwachungsserver PRO zu dem zweiten Telekommunikationsendgerät TEB.

Der Controller CON steuert im Normalfall das erste Gateway GWA. Da aber nun wegen der Überwachung der Zugang zum Datennetz WWW bis zu dem Überwachungsserver PRO verlängert wird und dort eigentlich erst das normale Routing für den Datenstrom DAT des Benutzers BEA anfängt, ist der Controller CON dazu eingerichtet, einen "Handover" vom Gateway zu dem Überwachungsserver durchführen. D. h. der Controller CON wird durch den ersten Zugangsserver AAA informiert, dass ein Überwachungsfall vorliegt und der Datenzugang ZUG des zu überwachenden Telekommunikationsendgerätes TEA zu einem Überwachungsserver PRO durchzutunneln ist. Der Controller betrachtet den Überwachungsserver PRO von nun an als "neues" erstes Gateway GWA und steuert diesen Server als ob es das Gateway GWA wäre. Im Überwachungsfall verhält sich der Call-Controller CON also so, als ob der Überwachungsserver PRO das Gateway GWA wäre, dies gilt sowohl für die rufende als auch die gerufene Seite.

Der Überwachungsserver PRO erstellt dann, wie bereits oben erwähnt, eine Kopie KOP des Datenstromes DAT zwischen den beiden Telekommunikationsendgeräten TEA, TEB. Zur Erstellung der Kopie KOP wird der ursprüngliche Datenstrom DAT in dem Überwachungsserver PRO verdoppelt. Der ursprüngliche Datenstrom DAT wird nach der Verdoppelung von dem Überwachungsserver PRO an das zweite Telekommunikationsendgerät TEB weitergeroutet, während die Kopie KOP des Datenstromes DAT, wie bereits oben erwähnt, an einen LI-Server oder eine Auswerteeinheit ASW übermittelt wird.

Der Überwachungsserver PRO als auch der LI-Server LIS können dazu eingerichtet sein, die Kopie KOP zwischenzuspeichern, um für den Fall, dass eine unmittelbare Zustellung an die Auswerteeinheit ASW nicht möglich ist, einen Datenverlust zu vermeiden.

Um ein Abhören ohne merkliche Beeinträchtigung der Qualität und der Geschwindigkeit des ursprünglichen Datenstroms DAT zu verwirklichen, sollte die Strecke zwischen dem Überwachungsserver PRO und dem Gateway GWA gering sein, weshalb es vorteilhaft ist, wenn eine große Anzahl von Überwachungsservern PRO in dem Datennetz WWW angeordnet sind.

Soll der angerufene Benutzer BEB überwacht werden erfolgt das Verfahren im wesentlichen so wie oben beschrieben, wobei der zweite Zugangsserver AAB anhand der IP-Adresse des gerufenen Teilnehmers BEB die Authentifizierung durchführen kann und den Datenstrom DAT über den Überwachungsserver PRO umleitet.

Zu Zweck der Authentifizierung des gerufenen Teilnehmers BEB anhand seiner IP-Adresse kann der zweite Zugangsserver AAB eine Datenbank DAB aufweisen, welche die IP-Adresse des gerufenen Teilnehmers und einen Eintrag ob dieser abgehört werden soll enthält.

Der Befehl zur Überwachung des Benutzers BEA von einer zur Überwachung berechtigten Behörde gegeben und in der versteckten Datenbank DBA eingetragen.

Wenn der überwachte Benutzer BEA eine Applikation zur Datenübertragung in dem Datennetz WWW auf seinem Telekommunikationsendgerät startet, erfolgt die Authentifizierung des Benutzers und die Feststellung ob ein Überwachungsfall vorliegt, wie bereits oben erwähnt.

Der A-Seite wird in einem Überwachungsfall anstelle der Adresse des gerufenen Benutzers BEB bzw. einer Telekommunikationseinrichtung TEB SER, wie beispielsweise einem Server, auf dem eine Homepage oder andere Daten abgelegt sind, die Adresse des Überwachungsservers PRO übermittelt. Das B-seitige Gateway GWB erhält von dem Authentifizierungsserver AAA oder Call-Controller CON anstelle der Netzwerkadresse des rufenden Benutzers BEA die Netzwerkadresse des Überwachungsservers PRO.

Der Überwachungsserver PRO wird von dem Authentifizierungsserver AAA oder Call Controler CON informiert, dass eine Überwachung stattfinden soll. Alle zur Überwachung und Verbindung notwendigen Informationen, z. B. "Verbinde die A-Seite mit der B-Seite" und ähnliche Informationen, können mittels H.248 Übertragung von dem Authentifizierungsserver AAA bzw. Call-Controler CON an den Überwachungsserver PRO übertragen werden.

In dem Überwachungsserver wird, wie bereits oben erwähnt,der Datenstrom DAT zwischen dem A-seitigen und B-seitigen Benutzer bzw. Server verdoppelt, wobei die verdoppelten Daten mit einer Identifikationskennzeichnung IDK versehen werden. Die so erstellte Kopie KOP wird in weiterer Folge an den LI-Server übermittelt.

Für den originalen Datenstrom funktioniert der Überwachungsserver wie ein Proxyserver und verbindet lediglich die A-Seite mit der B-Seite.

Eine andere Variante der Erfindung sieht vor, dass die A-Seite von dem Authentifizierungsserver AAA oder Call-Controler CON die Netzwerkadresse der B-Seite erhält, wobei das A-seitige Gateway mittels H.248-Übertragung dazu aufgefordert wird, den gesamten Datenverkehr, der von dem Benutzer BEA stammt, zu dem Überwachungsserver zu tunneln. Hierbei wird der B-Seite, deren Netzwerkadresse bekannt ist anstelle der Netzwerkadresse der A-Seite von dem Call-Controler die Adresse des Überwachungsservers PRO übermittelt.

Der Überwachungsserver PRO erhält von dem Call-Controler die entsprechenden Informationen für das Tunnneln und verbindet die A-Seite mit der B-Seite.

Die Vorteile des Tunnelns bestehen darin, dass für den überwachten Benutzer BEA die für das Umleiten des Datenstroms über den Überwachungsserver PRO notwendigen Adressänderungen nicht sichtbar sind.

Wenn der Überwachungsserver PRO von dem Authentifizierungsserver AAA, AAB oder dem Call-Controler über eine H.248 Kommunikation informiert wird, dass ein Datenstrom DAT umgeleitet wird, so kann er eine Startnachricht an den LI-Server übermitteln, sodass dieser die notwendigen Daten aus der LI-Datenbank LID abfragt und diese bei eintreffen der Kopie KOP schon zur Verfügung stehen.

Wenn der zu überwachende Datenaustausch beendet wird, dann informiert der Call-Controler CON den Überwachungsserver PRO, dass er die Kommunikation bezüglich der konkreten Überwachung mit dem LI-Server abbrechen soll. Nach Erhalt einer von dem Überwachungsserver PRO stammenden Beendigungsnachricht kann der LI-Server die aus LI-Datenbank stammenden Daten wieder löschen und die Kommunikation mit den Bedarfsträgern einstellen.

## Patentansprüche

1. Verfahren zur Überwachung eines Datenstroms (DAT) in einem Datennetz (WWW) zwischen zumindest einem Telekommunikationsendgerät (TEA), welches über zumindest ein Gateway(GWA, GWB) mit dem Datennetz (WWW) verbunden ist, und zumindest einer weiteren Telekommunikationseinrichtung (SER, TEB), wobei zumindest ein Authentifikationsserver (AAA, AAB) vorgesehen ist, der dazu eingerichtet ist, eine Zugangskontrolle (ZUG) zum Datennetz (WWW) durchzuführen,
**dadurch gekennzeichnet, dass** von dem zumindest einem Authentifikationsserver (AAA, AAB) überprüft wird, ob der Datenstrom (DAT) zwischen dem zumindest einem Telekommunikationsendgerät (TEA) und der zumindest einen weiteren Telekommunikationseinrichtung (SER, TEB) überwacht werden soll, wobei in einem Überwachungsfall eine Kopie (KOP) des Datenstroms (DAT) erstellt wird, welcher eine Identifikationskennzeichnung (IDK) beigefügt wird, und die Kopie samt Identifikationskennzeichnung (IDK) hierauf an zumindest einen LI-Server (LIS) und/oder direkt an eine Auswerteeinheit (ASW) übermittelt wird.

2. Verfahren nach Anspruch 1,
**dadurch gekennzeichnet, dass** die Kopie (KOP) von dem Gateway (GWA, GWB) erstellt wird.

3. Verfahren nach Anspruch 1,
**dadurch gekennzeichnet, dass** die Kopie von einem eigens hierfür vorgesehenen Überwachungsserver (PRO) erstellt wird.

4. Verfahren nach einem der Ansprüche 1 bis 3,
**dadurch gekennzeichnet, dass** der LI-Server anhand der Identifikationskennzeichnung (IDK) feststellt, ob zumindest eine Sekundärkopie (WKO) der Kopie (KOP) erstellt werden soll, und an wen die Kopie (KOP) und/oder die zumindest eine Sekundärkopie (WKO) zugestellt werden soll(en).

5. Verfahren nach Anspruch 4,
**dadurch gekennzeichnet, dass** der LI-Server (LIS) die zumindest eine Sekundärkopie (WKO) der Kopie (KOP) erstellt.

6. Verfahren nach einem der Ansprüche 1 bis 4,
**dadurch gekennzeichnet, dass** der LI-Server (LIS) eine Schnittstellenanpassung zu der Auswerteeinheit (ASW) durchführt.

7. Verfahren nach einem der Ansprüche 1 bis 5,
**dadurch gekennzeichnet, dass** der Authentifizierungsserver (AAA, AAB) anhand einer dem zumindest einem Telekommunikationsendgerät (TEA) in einer verborgenen Datenbank (DBA, DBB)zugeordneten Überwachungskennzeichnung (UWD) feststellt, ob ein Überwachungsfall vorliegt.

8. Verfahren nach Anspruch 6,
**dadurch gekennzeichnet, dass** die verborgene Datenbank (DBA, DBB) mit einer Verwaltungsdatenbank (VDA, VDB) zur Verwaltung von Benutzerprofilen und Benutzerauthentifikationsdaten in Verbindung steht und jedem in der Verwaltungsdatenbank (VDA, VDB) eingetragenem Benutzer (BEA, BEB) eine Überwachungskennzeichnung (UWD) in der verborgenen Datenbank (DBA, DBB) zugeordnet wird.

9. Verfahren nach Anspruch 7,
**dadurch gekennzeichnet, dass** im Fall einer Löschung von Benutzerauthentifikationsdaten in der Verwaltungsdatenbank (VWA, VWB) zugeordnete Überwachungskennzeichnungen (UWD) in der verborgenen Datenbank (DBA, DBB) gelöscht werden.

10. Verfahren nach einem der Ansprüche 1 bis 6,
**dadurch gekennzeichnet, dass** der Datenstrom (DAT) als Voice over IP-Datenstrom übertragen wird.

11. Verfahren nach Anspruch 9,
**dadurch gekennzeichnet, dass** ein Call-Controller (CON) den Datenstrom (DAT) über den Überwachungsserver (PRO) umleitet, der die Kopie (KOP) erstellt.

12. Verfahren nach Anspruch 3 bis 10,
**dadurch gekennzeichnet, dass** der Authentifizierunsserver (AAA, AAB) in einem Überwachungsfall den Datenstrom (DAT) über den Überwachungsserver (PRO) umleitet.

13. Verfahren nach einem der Ansprüche 3 bis 11,
**dadurch gekennzeichnet, dass** der Datenzugang (ZUG) von dem Gateway (GWA, GWB) zu dem Überwachungsserver (PRO) durchgetunnelt wird.

14. Verfahren nach einem der Ansprüche 3 bis 12,
**dadurch gekennzeichnet, dass** die Kopie (KOP) des Datenstroms (DAT) auf dem Überwachungsserver (PRO) zwischengespeichert werden.

15. Verfahren nach einem der Ansprüche 1 bis 11,
**dadurch gekennzeichnet, dass** die Kopie des Datenstroms (DAT) auf dem LI-Server zwischengespeichert wird.

16. Verfahren nach einem der Ansprüche 10 bis 14,
**dadurch gekennzeichnet, dass** der Controller (CON) sowohl das Gateway (GWA, GWB) als auch den Überwachungsserver (PRO) steuert.

17. Verfahren nach einem der Ansprüche 11 bis 14,
**dadurch gekennzeichnet, dass** der zumindest eine Authentifizierungsserver (AAA, AAB) den Überwachungsserver steuert.

18. Telekommunikationssystem, welches zur Überwachung eines Datenstroms (DAT) in einem Datennetz (WWW) zwischen zumindest einem Telekommunikationsendgerät (TEA), welches über zumindest ein Gateway(GWA, GWB) mit dem Datennetz (WWW) verbunden ist, und zumindest einer weiteren Telekommunikationseinrichtung (SER, TEB) eingerichtet ist, wobei zumindest ein Authentifikationsserver (AAA, AAB) vorgesehen ist, der dazu eingerichtet ist, eine Zugangskontrolle (ZUG) zum Datennetz (WWW) durchzuführen,
**dadurch gekennzeichnet, dass** der Authentifikationsserver (AAA, AAB) dazu eingerichtet ist, zu überprüfen, ob der Datenstrom (DAT) zwischen dem zumindest einem Telekommunikationsendgerät (TEA) und der zumindest einen weiteren Telekommunikationseinrichtung (SER, TEB) überwacht werden soll, wobei das Telekommunikationssystem (SYS) dazu eingerichtet ist, in einem Überwachungsfall eine Kopie (KOP) des Datenstroms (DAT) zu erstellen und der Kopie (KOP) eine Identifikationskennzeichnung (IDK) hinzuzufügen und die Kopie (KOP) samt Identifikationskennzeichnung (IDK) an zumindest einen LI-Server (LIS) und/oder direkt an eine Auswerteeinheit (ASW) zu übermitteln.

19. Telekommunikationssystem nach Anspruch 17,
**dadurch gekennzeichnet, dass** das Gateway (GWA, GWB) dazu eingerichtet ist, die Kopie (KOP) des Datenstroms (DAT) zu erstellen.

20. Telekommunikationssystem nach Anspruch 17,
**dadurch gekennzeichnet, dass** ein Überwachungsserver (PRO) vorgesehen ist, der dazu eingerichtet ist die Kopie (KOP) zu erstellen.

21. Telekommunikationssystem nach einem der Ansprüche 17 bis 19,
**dadurch gekennzeichnet, dass** der LI-Server dazu eingerichtet ist, anhand der Identifikationskennzeichnung (IDK) festzustellen, ob zumindest eine Sekundärkopie (WKO) der Kopie (KOP) erstellt werden soll, und an wen die Kopie (KOP) und/oder die zumindest eine Sekundärkopie (WKO) zugestellt werden soll (en).

22. Telekommunikationssystem nach Anspruch 21,
**dadurch gekennzeichnet, dass** der LI-Server dazu eingerichtet ist, die zumindest eine Sekundärkopie (WKO) der Kopie (KOP) zu erstellen.

23. Telekommunikationssystem nach einem der Ansprüche 17 bis 22,
**dadurch gekennzeichnet, dass** der LI-Server, dazu eingerichtet ist eine Schnittstellenanpassung zu der Auswerteeinheit (ASW) durchzuführen.

24. Telekommunikationssystem nach einem der Ansprüche 17 bis 23,
**dadurch gekennzeichnet, dass** der Authentifizierungsserver (AAA, AAB) dazu eingerichtet ist, anhand einer dem zumindest einen Telekommunikationsendgerät (TEA) in einer verborgenen Datenbank (DBA, DBB)zugeordneten Überwachungskennzeichnung (UWD) festzustellen, ob ein Überwachungsfall vorliegt.

25. Telekommunikationssystem nach Anspruch 24,
**dadurch gekennzeichnet, dass** die verborgene Datenbank (DBA, DBB) und eine dem Authentifizierungsserver zugeordnete Verwaltungsdatenbank (VDA, VDB) zur Verwaltung von Benutzerprofilen und Benutzerauthentifikationsdaten dazu eingerichtet sind Daten miteinander auszutauschen, wobei jedem in der Verwaltungsdatenbank (VDA, VDB) eingetragenen Benutzer (BEA, BEB) eine Überwachungskennzeichnung (UWD) in der verborgenen Datenbank (DBA, DBB) zugeordnet ist.

26. Telekommunikationssystem nach Anspruch 25,
**dadurch gekennzeichnet, dass** es dazu eingerichtet ist, im Fall einer Löschung von Benutzerauthentifikationsdaten in der Verwaltungsdatenbank (VWA, VWB) zugeordnete Überwachungskennzeichnungen (UWD) in der verborgenen Datenbank (DBA, DBB) zu löschen.

27. Telekommunikationssystem nach einem der Ansprüche 17 bis 26,
**dadurch gekennzeichnet, dass** der Datenstrom (DAT) ein Voice over IP-Datenstrom ist.

28. Telekommunikationssystem nach Anspruch 27,
**dadurch gekennzeichnet, dass** ein Call-Controller (CON) vorgesehen ist, der dazu eingerichtet ist, in einem Überwachungsfall den Datenstrom (DAT) über den Überwachungsserver (PRO) umzuleiten.

29. Telekommunikationssystem nach einem der Ansprüche 20 bis 28,
**dadurch gekennzeichnet, dass** der Authentifizierunsserver (AAA, AAB) dazu eingerichtet ist, in einem überwachungsfall den Datenstrom (DAT) über den Überwachungsserver (PRO) umzuleiten.

30. Telekommunikationssystem nach einem der Ansprüche 20 bis 29,
**dadurch gekennzeichnet, dass** es dazu eingerichtet ist, den Datenzugang (ZUG) von dem Gateway (GWA, GWB) zu dem Überwachungsserver (PRO) durchzutunneln.

31. Telekommunikationssystem nach einem der Ansprüche 20 bis 30,
**dadurch gekennzeichnet, dass** der Überwachungsserver dazu eingerichtet ist, die Kopie (KOP) des Datenstroms (DAT) zwischenzuspeichern.

32. Telekommunikationssystem nach einem der Ansprüche 17 bis 31,
**dadurch gekennzeichnet, dass** der LI-Server dazu eingerichtet ist, die Kopie (KOP) des Datenstroms (DAT) zwischenzuspeichern.

33. Telekommunikationssystem nach einem der Ansprüche 28 bis 32,
**dadurch gekennzeichnet, dass** der Call-Controller (CON) dazu eingerichtet ist, sowohl das Gateway (GWA, GWB) als auch den Überwachungsserver (PRO) zu steuern.

34. Telekommunikationssystem nach einem der Ansprüche 29 bis 32,
**dadurch gekennzeichnet, dass** der Authentifizierungsserver (AAA, AAB) dazu eingerichtet ist, den Überwachungsserver zu steuern.

35. Telekommunikationssystem nach einem der Ansprüche 20 bis 34,
**dadurch gekennzeichnet, dass** der Überwachungsserver (PRO) die Funktionalität eines Proxy-Servers aufweist.

## Claims

1. Method for monitoring a data stream (DAT) in a data network (WWW) between at least one telecommunications terminal (TEA) connected to the data network (WWW) via at least one gateway (GWA, GWB), and at least one other telecommunications device (SER, TEB), at least one authentication server (AAA, AAB) being provided which is set up to perform access control (ZUG) to the data network (WWW),
**characterised in that** a check is performed by the authentication server (AAA, AAB), of which there is at least one, to determine whether the data stream (DAT) between the telecommunications terminal (TEA), of which there is at least one, and the other telecommunications device (SER, TEB), of which there is at least one, is to be monitored. If this is the case, a copy (KOP) of the data stream (DAT) is created to which an identifying designation (IDK) is added, and the copy together with the associated identifying designation (IDK) is transmitted to at least one LI server (LIS) and/or directly to an analyser unit (ASW).

2. Method according to claim 1,
**characterised in that** the copy (KOP) is created by the gateway (GWA, GWB).

3. Method according to claim 1,
**characterised in that** the copy is created by a dedicated monitoring server (PRO).

4. Method according to one of claims 1 to 3,
**characterised in that** the LI server establishes on the basis of the identifying designation (IDK) whether at least one secondary copy (WKO) of the copy (KOP) is to be created, and to whom the copy (KOP) and/or the secondary copy (WKO), of which there is at least one, is/are to be delivered.

5. Method according to claim 4,
**characterised in that** the LI server (LIS) creates the secondary copy (WKO), of which there is at least one, of the copy (KOP).

6. Method according to one of claims 1 to 4,
**characterised in that** the LI server (LIS) performs interface adaptation to the analyser unit (ASW).

7. Method according to one of claims 1 to 5,
**characterised in that** the authentication server (AAA, AAB) establishes whether monitoring is to take place on the basis of a monitoring designation (UWD) assigned to the telecommunications terminal (TEA), of which there is at least one, and contained in a hidden database (DBA, DBB).

8. Method according to claim 6,
**characterised in that** the hidden database (DBA, DBB) is linked to an administration database (VDA, VDB) for administering user profile and user authentication data and that a monitoring designation (UWD) contained in the hidden database (DBA, DBB) is assigned to each user (BEA, BEB) entered in the administration database (VDA, VDB).

9. Method according to claim 7,
**characterised in that** in the event of deletion of user authentication data in the administration database (VWA, VWB), assigned monitoring designations (UWD) are deleted in the hidden database (DBA, DBB).

10. Method according to one of claims 1 to 6,
**characterised in that** the data stream (DAT) is transmitted as a Voice over IP data stream.

11. Method according to claim 9,
**characterised in that** a call controller (CON) diverts the data stream (DAT) via the monitoring server (PRO) which creates the copy (KOP).

12. Method according to claim 3 to 10,
**characterised in that**, if monitoring is to take place, the authentication server (AAA, AAB) diverts the data stream (DAT) via the monitoring server (PRO).

13. Method according to one of claims 3 to 11,
**characterised in that** the data access (ZUG) is tunnelled from the gateway (GWA, GWB) through to the monitoring server (PRO).

14. Method according to one of claims 3 to 12,
**characterised in that** the copy (KOP) of the data stream (DAT) is buffered on the monitoring server (PRO).

15. Method according to one of claims 1 to 11,
**characterised in that** the copy of the data stream (DAT) is buffered on the LI server.

16. Method according to one of claims 10 to 14, **characterised in that** the controller (CON) controls both the gateway (GWA, GWB) and the monitoring server (PRO).

17. Method according to one of claims 11 to 14, **characterised in that** the authentication server (AAA, AAB), of which there is at least one, controls the monitoring server.

18. Telecommunications system which is set up for monitoring a data stream (DAT) in a data network (WWW) between at least one telecommunications terminal (TEA) connected to the data network (WWW) via at least one gateway (GWA, GWB), and at least one other telecommunications device (SER, TEB), at least one authentication server (AAA, AAB) being provided which is set up to perform access control (ZUG) to the data network (WWW),
**characterised in that** the authentication server (AAA, AAB) is set up to check whether the data stream (DAT) between the telecommunications terminal (TEA), of which there is at least one, and the other telecommunications device (SER, TEB), of which there is at least one, is to be monitored. If this is the case, the telecommunications system (SYS) is set up to create a copy (KOP) of the data stream (DAT) and to add an identifying designation (IDK) to the copy (KOP) and to transmit the copy (KOP) and associated identifying designation (IDK) to at least one LI server (LIS) and/or directly to an analyser unit (ASW).

19. Telecommunications system according to claim 17,
**characterised in that** the gateway (GWA, GWB) is set up to create the copy (KOP) of the data stream (DAT).

20. Telecommunications system according to claim 17,
**characterised in that** a monitoring server (PRO) is provided which is set up to create the copy (KOP).

21. Telecommunications system according to one of claims 17 to 19,
**characterised in that** the LI server is set up to establish, on the basis of the identifying designation (IDK), whether at least one secondary copy (WKO) of the copy (KOP) is to be created, and to whom the copy (KOP) and/or the secondary copy (WKO), of which there is at least one, is/are to be delivered.

22. Telecommunications system according to claim 21,
**characterised in that** the LI server is set up to create the secondary copy (WKO), of which there are at least one, of the copy (KOP).

23. Telecommunications system according to one of claims 17 to 22,
**characterised in that** the LI server is set up to perform an interface adaptation to the analyser unit (ASW).

24. Telecommunications system according to one of claims 17 to 23,
**characterised in that** the authentication server (AAA, AAB) is set up to establish, on the basis of a monitoring designation (UWD) assigned to the telecommunications terminal (TEA), of which there is at least one, in a hidden database (DBA, DBB), whether monitoring is to take place.

25. Telecommunications system according to claim 24,
**characterised in that** the hidden database (DBA, DBB) and an administration database (VDA, VDB) for administering user profiles and user authentication data and assigned to the authentication server are set up to exchange data with one another, every user (BEA, BEB) entered in the administration database (VDA, VDB) being assigned a monitoring designation (UWD) in the hidden database (DBA, DBB).

26. Telecommunications system according to claim 25,
**characterised in that** it is set up to delete assigned monitoring designations (UWD) in the hidden database (DBA, DBB) in the event of user authentication data being deleted in the administration database (VWA, VWB).

27. Telecommunications system according to one of claims 17 to 26,
**characterised in that** the data stream (DAT) is a Voice over IP data stream.

28. Telecommunications system according to claim 27,
**characterised in that** a call controller (CON) is provided which is set up to divert the data stream (DAT) via the monitoring server (PRO) if monitoring is to take place.

29. Telecommunications system according to one of claims 20 to 28,
**characterised in that** the authentication server (AAA, AAB) is set up to divert the data stream (DAT) via the monitoring server (PRO) if monitoring is to take place.

30. Telecommunications system according to one of claims 20 to 29,
**characterised in that** it is set up to tunnel the data access (ZUG) from the gateway (GWA, GWB) through to the monitoring server (PRO).

31. Telecommunications system according to one of claims 20 to 30,
**characterised in that** the monitoring server is set up to buffer the copy (KOP) of the data stream (DAT).

32. Telecommunications system according to one of claims 17 to 31,
**characterised in that** the LI server is set up to buffer the copy (KOP) of the data stream (DAT).

33. Telecommunications system according to one of claims 28 to 32,
**characterised in that** the call controller (CON) is set up to control both the gateway (GWA, GWB) and the monitoring server (PRO).

34. Telecommunications system according to one of claims 29 to 32,
**characterised in that** the authentication server (AAA, AAB) is set up to control the monitoring server.

35. Telecommunications system according to one of claims 20 to 34,
**characterised in that** the monitoring server (PRO) has proxy server functionality.

## Revendications

1. Procédé pour surveiller un flux de données (DAT) dans un réseau de données (WWW) entre au moins un terminal de télécommunications (TEA) qui est relié au réseau de données (WWW) via au moins une passerelle (GWA, GWB) et au moins un autre dispositif de télécommunications (SER, TEB), au moins un serveur d'authentification (AAA, AAB) étant prévu, lequel est aménagé pour effectuer un contrôle d'accès (ZUG) au réseau de données (WWW), **caractérisé en ce que** l'au moins un serveur d'authentification (AAA, AAB) vérifie si le flux de données (DAT) entre l'au moins un terminal de télécommunications (TEA) et l'au moins un autre dispositif de télécommunications (SER, TEB) doit être surveillé, une copie (KOP) du flux de données (DAT) à laquelle est annexé un marqueur d'identification (IDK) étant créée, dans un cas de surveillance, et la copie, avec le marqueur d'identification (IDK), étant ensuite transmise à l'au moins un serveur LI (LIS) et/ou directement à une unité d'évaluation (ASW).

2. Procédé selon la revendication 1, **caractérisé en ce que** la copie (KOP) est créée par la passerelle (GWA, GWB).

3. Procédé selon la revendication 1, **caractérisé en ce que** la copie est créée par un serveur de surveillance (PRO) expressément prévu à cet effet.

4. Procédé selon l'une des revendications 1 à 3, **caractérisé en ce que** le serveur LI constate, à l'aide du marqueur d'identification (IDK), s'il y a lieu de créer au moins une copie secondaire (WKO) de la copie (KOP) et à qui la copie (KOP) et/ou l'au moins une copie secondaire (WKO) doit (doivent) être notifiée(s).

5. Procédé selon la revendication 4, **caractérisé en ce que** le serveur LI (LIS) crée l'au moins une copie secondaire (WKO) de la copie (KOP).

6. Procédé selon l'une des revendications 1 à 4, **caractérisé en ce que** le serveur LI (LIS) effectue une adaptation de l'interface à l'unité d'évaluation (ASW).

7. Procédé selon l'une des revendications 1 à 5, **caractérisé en ce que** le serveur d'authentification (AAA, AAB), à l'aide d'un marqueur de surveillance (UWD) affecté à l'au moins un terminal de télécommunications (TEA) dans une base de données cachée (DBA, DBB), constate s'il y a cas de surveillance.

8. Procédé selon la revendication 6, **caractérisé en ce que** la base de données cachée (DBA, DBB) est en contact avec une base de données administratives (VDA, VDB) pour gérer des profils d'utilisateurs et des données d'authentification d'utilisateurs, et un marqueur de surveillance (UWD) est affecté, dans la base de données cachée (DBA, DBB), à chaque utilisateur (BEA, BEB) enregistré dans la base de données administratives (VDA, VDB).

9. Procédé selon la revendication 7, **caractérisé en ce que**, en cas d'effacement de données d'authentification d'utilisateurs dans la base de données administratives (VWA, VWB), des marqueurs de surveillance (UWD) associés sont également effacés dans la base de données cachée (DBA, DBB).

10. Procédé selon l'une des revendications 1 à 6, **caractérisé en ce que** le flux de données (DAT) est transmis en tant que flux de données «Voice over IP».

11. Procédé selon la revendication 9, **caractérisé en ce qu'**un contrôleur d'appels (CON) dévie le flux de données (DAT) via le serveur de surveillance (PRO) qui crée la copie (KOP).

12. Procédé selon l'une des revendications 3 à 10, **caractérisé en ce que** le serveur d'authentification (AAA, AAB), dans un cas de surveillance, dévie le flux de données (DAT) via le serveur de surveillance (PRO).

13. Procédé selon l'une des revendications 3 à 11, **caractérisé en ce que** l'accès de données (ZUG) est tunnelé de la passerelle (GWA, GWB) vers le serveur de surveillance (PRO).

14. Procédé selon l'une des revendications 3 à 12, **caractérisé en ce que** la copie (KOP) du flux de données (DAT) est stockée temporairement sur le serveur de surveillance (PRO).

15. Procédé selon l'une des revendications 1 à 11, **caractérisé en ce que** la copie du flux de données (DAT) est stockée temporairement sur le serveur LI.

16. Procédé selon l'une des revendications 10 à 14, **caractérisé en ce que** le contrôleur (CON) commande non seulement la passerelle (GWA, GWB), mais aussi le serveur de surveillance (PRO).

17. Procédé selon l'une des revendications 11 à 14, **caractérisé en ce que** l'au moins un serveur d'authentification (AAA, AAB) commande le serveur de surveillance.

18. Système de télécommunications, aménagé pour surveiller un flux de données (DAT) dans un réseau de données (WWW) entre au moins un terminal de télécommunications (TEA) qui est relié au réseau de données (WWW) via au moins une passerelle (GWA, GWB) et au moins un autre dispositif de télécommunications (SER, TEB), au moins un serveur d'authentification (AAA, AAB) étant prévu, lequel est aménagé pour effectuer un contrôle d'accès (ZUG) au réseau de données (WWW), **caractérisé en ce que** le serveur d'authentification (AAA, AAB) est aménagé pour vérifier s'il y a lieu de surveiller le flux de données (DAT) entre l'au moins un terminal de télécommunications (TEA) et l'au moins un autre dispositif de télécommunications (SER, TEB), le système de télécommunications (SYS) étant aménagé pour, dans un cas de surveillance, créer une copie (KOP) du flux de données (DAT), ajouter un marqueur d'identification (IDK) à la copie (KOP) et transmettre la copie (KOP), avec le marqueur d'identification (IDK), à au moins un serveur LI (LIS) et/ou directement à une unité d'évaluation (ASW).

19. Système de télécommunications selon la revendication 17, **caractérisé en ce que** la passerelle (GWA, GWB) est aménagée pour créer la copie (KOP) du flux de données (DAT).

20. Système de télécommunications selon la revendication 17, **caractérisé en ce qu'**est prévu un serveur de surveillance (PRO) qui est aménagé pour créer la copie (KOP).

21. Système de télécommunications selon l'une des revendications 17 à 19, **caractérisé en ce que** le serveur LI est aménagé pour constater, à l'aide du marqueur d'identification (IDK), s'il y a lieu de créer au moins une copie secondaire (WKO) de la copie (KOP) et à qui la copie (KOP) et/ou l'au moins une copie secondaire (WKO) doit (doivent) être notifiée(s).

22. Système de télécommunications selon la revendication 21, **caractérisé en ce que** le serveur LI est aménagé pour créer l'au moins une copie secondaire (WKO) de la copie (KOP).

23. Système de télécommunications selon l'une des revendications 17 à 22, **caractérisé en ce que** le serveur LI est aménagé pour effectuer une adaptation de l'interface à l'unité d'évaluation (ASW).

24. Système de télécommunications selon l'une des revendications 17 à 23, **caractérisé en ce que** le serveur d'authentification (AAA, AAB) est aménagé pour constater, à l'aide d'un marqueur de surveillance (UWD) affecté à l'au moins un terminal de télécommunications (TEA) dans une base de données cachée (DBA, DBB), s'il y a cas de surveillance.

25. Système de télécommunications selon la revendication 24, **caractérisé en ce que** la base de données cachée (DBA, DBB) et une base de données administratives (VDA, VDB) associée au serveur d'authentification pour gérer des profils d'utilisateurs et des données d'authentification d'utilisateurs sont aménagées pour échanger des données entre elles, un marqueur de surveillance (UWD) étant, dans la base de données cachée (DBA, DBB), affecté à chaque utilisateur (BEA, BEB) enregistré dans la base de données administratives (VDA, VDB).

26. Système de télécommunications selon la revendication 25, **caractérisé en ce qu'**il est aménagé pour, en cas d'effacement de données d'authentification d'utilisateurs dans la base de données administratives (VWA, VWB), effacer des marqueurs de surveillance (UWD) associés dans la base de données cachée (DBA, DBB).

27. Système de télécommunications selon l'une des revendications 17 à 26, **caractérisé en ce que** le flux de données (DAT) est un flux de données «Voice over IP».

28. Système de télécommunications selon la revendication 27, **caractérisé en ce qu'**est prévu un contrôleur d'appels (CON) qui est aménagé pour, dans un cas de surveillance, dévier le flux de données (DAT) via le serveur de surveillance (PRO).

29. Système de télécommunications selon l'une des revendications 20 à 28, **caractérisé en ce que** le serveur d'authentification (AAA, AAB) est aménagé pour, dans un cas de surveillance, dévier le flux de données (DAT) via le serveur de surveillance (PRO).

30. Système de télécommunications selon l'une des revendications 20 à 29, **caractérisé en ce qu'**il est aménagé pour tunneler l'accès de données (ZUG) de la passerelle (GWA, GWB) vers le serveur de surveillance (PRO).

31. Système de télécommunications selon l'une des revendications 20 à 30, **caractérisé en ce que** le serveur de surveillance est aménagé pour stocker temporairement la copie (KOP) du flux de données (DAT) .

32. Système de télécommunications selon l'une des revendications 17 à 31, **caractérisé en ce que** le serveur LI est aménagé pour stocker temporairement la copie (KOP) du flux de données (DAT) .

33. Système de télécommunications selon l'une des revendications 28 à 32, **caractérisé en ce que** le contrôleur d'appels (CON) est aménagé pour commander non seulement la passerelle (GWA, GWB), mais aussi le serveur de surveillance (PRO).

34. Système de télécommunications selon l'une des revendications 29 à 32, **caractérisé en ce que** le serveur d'authentification (AAA, AAB) est aménagé pour commander le serveur de surveillance.

35. Système de télécommunications selon l'une des revendications 20 à 34, **caractérisé en ce que** le serveur de surveillance (PRO) comporte la fonctionnalité d'un serveur proxy.
